(19) Europäisches Patentamt
European Patent Office
Office européen des brevets

(11) **EP 4 645 254 A1**

(12) **EUROPEAN PATENT APPLICATION**
published in accordance with Art. 153(4) EPC

(43) Date of publication:
05.11.2025 Bulletin 2025/45

(21) Application number: 23911439.0

(22) Date of filing: 17.11.2023

(51) International Patent Classification (IPC):
*G06V 10/98* (2022.01)     *G06T 7/00* (2017.01)
*G06T 7/70* (2017.01)     *G08G 1/00* (2006.01)
*G08G 1/16* (2006.01)

(52) Cooperative Patent Classification (CPC):
G06T 7/00; G06T 7/70; G06V 10/98; G08G 1/00;
G08G 1/16

(86) International application number:
PCT/JP2023/041494

(87) International publication number:
WO 2024/142657 (04.07.2024 Gazette 2024/27)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.12.2022 JP 2022212750

(71) Applicant: Astemo, Ltd.
Chiyoda-ku,
Tokyo 1000004 (JP)

(72) Inventors:
• KITAYAMA, Akira
  Tokyo 100-8280 (JP)
• ONO, Goichi
  Tokyo 100-8280 (JP)
• ITO, Hiroaki
  Hitachinaka-shi, Ibaraki 312-8503 (JP)

(74) Representative: Strehl & Partner mbB
Maximilianstrasse 54
80538 München (DE)

(54) **IMAGE RECOGNITION DEVICE AND SAVED IMAGE DETERMINATION METHOD**

(57)     This image recognition device, which performs object detection by using an image recognition program with respect to an input image, comprises: a storage unit that stores a current program, which is a conventional image recognition program, and a new program, which is a new image recognition program; a difference extraction unit that extracts a detection difference which is a difference between an object detection result of the current program and an image recognition result of the new program with respect to the same input image; a transmission determination unit that determines a saving need as to whether or not to save the input image on the basis of a status of appearance of the detection difference; and a saving unit that outputs the input image that the transmission determination unit has determined to save to the outside of the image recognition device, or that saves the input image that the transmission determination unit has determined to save in the image recognition device.

FIG. 2

**Description**

Technical Field

The present invention relates to an image recognition device and a saved image determination method.

Background Art

For an application that has a potential to cause a serious accident involving human life due to a program defect, it is required to perform thorough performance verification before the program is put into actual operation. For example, for an automotive program, verification is performed by using a large number of test patterns in a virtual development environment, such as a simulator, and then a test vehicle is tested on public roads for hundreds of thousands of kilometers to ensure safety by confirming that there are no defects. Verification using an experimental vehicle is also required when updating a program. However, verification using a real machine that operates in a real environment requires a huge amount of time and requires human resources to verify the results of the verification. Patent Literature 1 discloses an operation verification device that includes a dividing unit and a cause estimation unit. The dividing unit divides a plurality of control processes into parallelism processing of implementing parallel processing of the plurality of control processes and functional sequential processing of implementing functions by the plurality of control processes for each of a first program including the plurality of control processes and a second program including a plurality of control processes in which at least some of the plurality of control processes have been changed. The dividing unit outputs, as a first divided program, the first program in which each of the plurality of control programs is divided into the parallelism processing and the functional sequential processing. The dividing unit outputs, as a second divided program, the second program in which each of the plurality of control processes is divided into the parallelism processing and the functional sequential processing. When a defect of a function in the second divided program is detected as a functional defect, the cause estimation unit estimates, as a cause of the functional defect, the functional sequential processing that is different between the first divided program and the second divided program. When a defect caused by the parallelism processing in the second divided program is detected as a parallelism defect, the cause estimation unit estimates, as a cause of the parallelism defect, the parallelism processing that is different between the first divided program and the second divided program.

Citation List

Patent Literature

Patent Literature 1: International Publication No. WO 2018/150504

Summary of Invention

Technical Problem

In the invention described in Patent Literature 1, it is not possible to appropriately determine an image for evaluating a program to be newly created.

Solution to Problem

According to a first aspect of the present invention, an image recognition device that performs object detection on an input image by using an image recognition program includes: a storage unit that stores a current program which is a previous image recognition program and a new program which is a new image recognition program; a difference extraction unit that extracts a detected difference which is a difference between an object detection result of the current program and an image recognition result of the new program for the same input image; a transmission determination unit that determines whether to save the input image, based on a status of appearance of the detected difference; and a saving unit that outputs, to an outside of the image recognition device, the input image determined by the transmission determination unit to be saved, or that saves, in the image recognition device, the input image determined by the transmission determination unit to be saved.

According to a second aspect of the present invention, a saved image determination method that is executed by an image recognition device that performs object detection on an input image by using an image recognition program and includes a storage unit that stores a current program which is a previous image recognition program and a new program which is a new image recognition program includes: a difference extraction step of extracting a detected difference that is a difference between an object detection result of the current program and an image recognition result of the new program for the same input image; a transmission determination step of determining whether to save the input image, based on a status of appearance of the detected difference; and a saving step of outputting, to an outside of the image recognition device, the input image determined by the transmission determination unit to be saved, or saving, in the image recognition device, the input image determined by the transmission determination unit to be saved.

Advantageous Effects of Invention

According to the present invention, it is possible to appropriately determine an image for evaluating a program to be newly created.

Brief Description of Drawings

Fig. 1 is a configuration diagram of a vehicle on which an image recognition device according to a first embodiment is mounted.
Fig. 2 is a configuration diagram of the image recognition device according to the first embodiment.
Fig. 3 is a hardware configuration diagram of the image recognition device.
Fig. 4 is a schematic diagram illustrating processing of a difference extraction unit.
Fig. 5 is a diagram illustrating a first example of a transmission determination unit.
Fig. 6 is a diagram illustrating an example of a detected difference input to a time-series filter.
Fig. 7 is a diagram illustrating another example of the detected difference input to the time-series filter.
Fig. 8 is a diagram illustrating a second example of the transmission determination unit.
Fig. 9 is a diagram illustrating an example of a degree-of-danger determination map referenced by a spatial filter.
Fig. 10 is a diagram illustrating a third example of the transmission determination unit.
Fig. 11 is a configuration diagram of an image recognition device according to a first modification.
Fig. 12 is a configuration diagram of the image recognition device according to a second embodiment.
Fig. 13 is a configuration diagram of a transmission determination unit according to the second embodiment.
Fig. 14 is a configuration diagram of a vehicle on which the image recognition device according to a third embodiment is mounted.
Fig. 15 is a diagram illustrating a relationship between the image recognition device, a control program, a second control program, and a control difference extraction unit.

Description of Embodiments

Hereinafter, embodiments of the present invention are described with reference to the drawings. Each of the embodiments is an example for explaining the present invention, and omission and simplification are made as appropriate for clarity of explanation in each of the embodiments. The present invention can be implemented in other various embodiments. Each of components may be singular or plural unless otherwise specified.

The position, size, shape, range, and the like of each of components illustrated in the drawings may not represent the actual position, size, shape, range, and the like in order to facilitate understanding of the invention. Therefore, the present invention is not necessarily limited to the positions, sizes, shapes, ranges, and the like disclosed in the drawings. In a case where multiple components having the same or similar functions are present, different subscripts may be added to the same reference sign for explanation. In addition, in a case where there is no need to distinguish between these multiple components, the subscripts may be omitted in the explanation.

In each of the embodiments, processing that is performed by executing a program may be described. In this case, a calculator executes the program by using a processor (for example, a CPU or a GPU) and performs the processing defined by the program while using a storage source (for example, a memory), an interface device (for example, a communication port), and the like. Therefore, a main part that performs the processing by executing the program may be the processor. Similarly, the main part that performs the processing by executing the program may be a controller, a device, a system, a calculator, a node, or the like that includes the processor. The main part that performs the processing by executing the program may be an arithmetic unit and may include a dedicated circuit that performs specific processing. The dedicated circuit is, for example, a field programmable gate array (FPGA), an application specific integrated circuit (ASIC), a complex programmable logic device (CPLD), or the like.

The program may be installed in the calculator from a program source. The program source may be a program distribution server or a computer-readable storage medium. In a case where the program source is a program distribution server, the program distribution server includes a processor and a storage source storing the program to be distributed, and the processor of the program distribution server may distribute, to another calculator, the program to be distributed. In addition, in the embodiments, two or more programs may be implemented as a single program, and a single program may be implemented as two or more programs.

In recent years, for the implementation of advanced autonomous driving, a peripheral recognition application that uses an image recognition program to which a deep neural network (DNN) which is a type of machine learning is applied is becoming more popular. It is known that it is difficult to change the performance of a program using machine learning when updating the program, compared to rule-based algorithms.

Therefore, for example, in the peripheral recognition application, for a certain image, the current version of the program (hereinafter referred to as a "current program") was able to correctly recognize an object, but an updated version of the program (hereinafter referred to as a "new program") may have degraded object recognition performance. The degradation of the recognition performance includes object recognition in which a recognized object is shifted in position, non-detection due to a reliability score used for recognition determination and falling below a threshold value, and the like.

These events occur due to a complex relationship between various parameters, including the size, color, orientation, and shape of the object in the image, as well as its positional relationship with a peripheral object and a background, and noise caused by hardware and introduced during image capturing. Therefore, detection results fluctuate every time image recognition processing is performed, and thus when processing results of the current program and the new program are subjected to equivalence verification, a difference occur between the two programs very frequently.

For the purpose of ex-post verification and program development, it is useful to save images in which the processing results of the current program and the new program are different, but when images are saved solely because of a difference between the processing results, the number of targets to be saved is large. That is, when images in which the recognition performance of the current program and the recognition performance of the new program are different are saved, the number of targets to be saved is extremely large. A method of determining an image to be saved will be described below.

In the following embodiments, an example in which the present invention is applied to vehicle control, for example, an in-vehicle ECU for an advanced driver assistance system (ADAS) or autonomous driving (AD) will be described. However, the present invention is not limited to the in-vehicle ECU for the ADAS or AD. In addition, the present invention may be used to update and verify peripheral recognition AI for an autonomous guided vehicle (AGV) and construction machinery, and the present invention may also be used to update and verify AI for surveillance cameras, and the like. The present invention can be applied to general update verification of an information processing algorithm using machine learning such as image processing.

First Embodiment

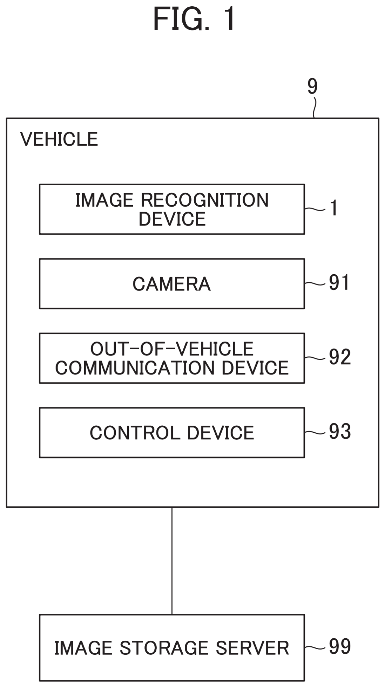

A first embodiment of an image recognition device and a saved image determination method will be described with reference to Figs. 1 to 10.

Fig. 1 is a configuration diagram of a vehicle 9 on which an image recognition device 1 is mounted. The vehicle 9 includes the image recognition device 1, a camera 91, an out-of-vehicle communication device 92, and a control program 93. The image recognition device 1 is capable of communicating with the camera 91, the out-of-vehicle communication device 92, and the control program 93 by using a known communication method. This communication may be wired communication or wireless communication. Examples of the communication include IEEE802.3, Controller Area Network, and IEEE802.11. The camera 91 captures images of surroundings of the vehicle 9 and outputs the captured images (hereinafter referred to as "captured images" or "input images") to the image recognition device 1. The image recognition device 1 performs object detection on the captured images by using an image recognition program and outputs a detection result to the control program 93. The image recognition device 1 outputs some of the captured images to the out-of-vehicle communication device 92 as described later.

The out-of-vehicle communication device 92 transmits the captured images output by the image recognition device 1 to an image storage server 99 via wireless communication. The image storage server 99 is present outside the vehicle 9. The out-of-vehicle communication device 92 and the image storage server 99 may directly wirelessly communicate with each other, a communication relay point fixed to the ground, such as a base station, may be present between the out-of-vehicle communication device 92 and the image storage server 99, or the out-of-vehicle communication device 92 and the image storage server 99 may communicate with each other via another vehicle. The image storage server 99 stores the captured images received from the out-of-vehicle communication device 92 to a nonvolatile storage device not illustrated.

The control program 93 performs calculation using the detection result output by the image recognition device 1. The content of the calculation performed by the control program 93 is arbitrary. For example, the control program 93 may control the vehicle 9 based on the detection result or notifies a driver of the vehicle 9 of the presence of an obstacle based on a result of the calculation.

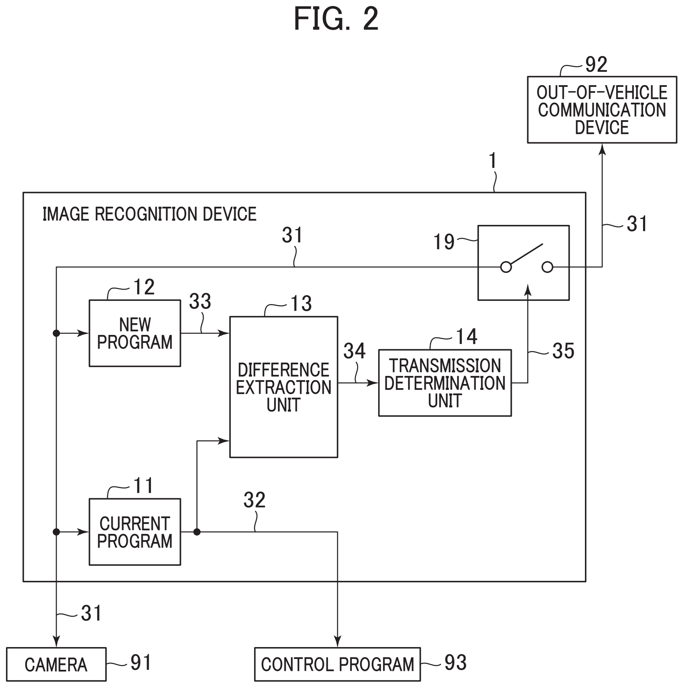

Fig. 2 is a configuration diagram of the image recognition device 1. The image recognition device 1 includes a current program 11, a new program 12, a difference extraction unit 13, a transmission determination unit 14 and a trigger receiving unit 19. The camera 91 outputs a captured image 31 to the current program 11, the new program 12, and the trigger receiving unit 19. The current program 11 inputs at least the captured image 31 and outputs a current detection result 32. The new program 12 inputs at least the captured image 31 and outputs a new detection result 33. The difference extraction unit 13 inputs the current detection result 32 and the new detection result and outputs a detected difference 34. The transmission determination unit 14 inputs the detected difference 34 and outputs a transmission trigger 35. The trigger receiving unit 19 inputs the captured image 31 and the transmission trigger 35 and outputs the captured image 31. The trigger receiving unit 19 outputs the captured image 31 to the outside for saving, and thus can be referred to as a "saving unit".

Each of the current program 11 and the new program 12 is an image recognition program that inputs the captured image 31, and detects an object. However, the operation stability of the current program 11 has already been confirmed, whereas the operation of the new program 12 has not been sufficiently confirmed. The new program 12 is, for example, a program obtained by correcting a missed detection and a detection error in the current program 11, or is a program modified to recognize a new type of object. Details of operations of the current program 11 and the new program 12 are not particularly limited. Each of the current program 11 and the new program 12 may be a DNN-based program that uses machine learning or may be a logic-based program to which pattern recognition technology or the like is applied.

Each of the current program 11 and the new program 12 can take various forms, and is, for example, a single binary file, a combination of a binary file and a setting file, a combination of a binary file and a library, or the like. At least one of the current program 11 and the new program 12 may be a rewritable logic circuit.

The current detection result 32 output by the current program 11 and the new detection result 33 output by the new program 12 are coordinates of an object in the captured image 31, the type of the object, and the detection reliability. The coordinates of the object are, for example, coordinates in an orthogonal coordinate system with the origin at the top left of the captured image. The type of the object is, for example, a vehicle, a pedestrian, a bicycle, or the like. The current detection result 32 is output to the control program 93, which is its original purpose, and is output to the difference extraction unit 13 for comparison.

The new detection result 33 output by the new program 12 is an output result of the new program 12 for which verification is insufficient, and thus the new detection result 33 is not used as input of post-processing of image recognition in the in-vehicle ECU and is used as information for verification.

The difference extraction unit 13 extracts a difference between the current detection result 32 and the new detection result 33 and outputs the difference as the detected difference 34. Detailed processing of the difference extraction unit 13 will be described later. The transmission determination unit 14 determines whether to save the input image 31, based on a status of appearance of the detected difference 34, and outputs the transmission trigger 35. The status of the appearance of the detected difference 34 includes, for example, the appearance frequency, appearance continuity, and position fluctuation of the detected difference 34 in time series. In addition, it may be determined whether a position at which the detected difference 34 has occurred is in a predetermined region, and the above-described conditions for determination, such as the appearance frequency and the appearance continuity, may be combined with a condition for determination of the position at which the difference has occurred. The transmission trigger 35 may be a signal that is output only when the transmission determination unit 14 determines that the captured image needs to be saved, or may be a signal that includes data indicating whether the captured image needs to be saved, and is constantly output. Detailed processing of the transmission determination unit 14 will be described later.

The trigger receiving unit 19 outputs the captured image 31 to the out-of-vehicle communication device 92 based on the transmission trigger 35. In a case where the transmission trigger 35 is output only when the transmission determination unit 14 determines that the captured image 31 needs to be saved, the trigger receiving unit 19 outputs the captured image 31 when the trigger receiving unit 19 inputs the transmission trigger 35. In a case where the transmission determination unit 14 outputs the transmission trigger 35 including the data indicating whether the captured image 31 needs to be saved, the trigger receiving unit 19 outputs the captured image 31 when the data indicating that the captured image 31 needs to be saved is included in the transmission trigger 35.

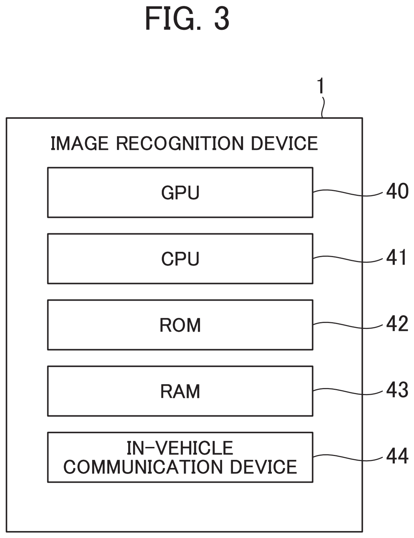

Fig. 3 is a hardware configuration diagram of the image recognition device 1. The image recognition device 1 is an electronic control device including a CPU 41 that is a central processing unit, a ROM 42 that is a read-only storage device, a RAM 43 that is a rewritable storage device, and an in-vehicle communication device 44, that is, the image recognition device 1 is an ECU. The CPU 41 performs the above-described various calculations by loading a program stored in the ROM 42 into the RAM 43.

The image recognition device 1 may be implemented by an FPGA which is a rewritable logic circuit or an application specific integrated circuit (ASIC) which is an application specific integrated circuit, instead of a combination of a GPU 40, the CPU 41, the ROM 42, and the RAM 43. In addition, the image recognition device 1 may be implemented by a combination of different configurations, for example, a combination of the CPU 41, the ROM 42, the RAM 43, and an FPGA, instead of the combination of the GPU 40, the CPU 41, the ROM 42, and the RAM 43. Further, a dedicated circuit (AI accelerator or the like) for efficiently executing a DNN may be mounted, instead of the GPU 40. The in-vehicle communication device 44 supports IEEE802.3 or Controller Area Network and implements communication with the camera 91 and the out-of-vehicle communication device 92.

Although Fig. 3 illustrates one GPU 40, one CPU 41, and one RAM 43, two GPUs 40, two CPU 41, and two RAM 43 may be mounted, and the current program 11 and the new program 12 may be executed by different hardware resources. Further, the image recognition device 1 may include a plurality of ECUs, and the current program 11 and the new program 12 may be executed by the different ECUs.

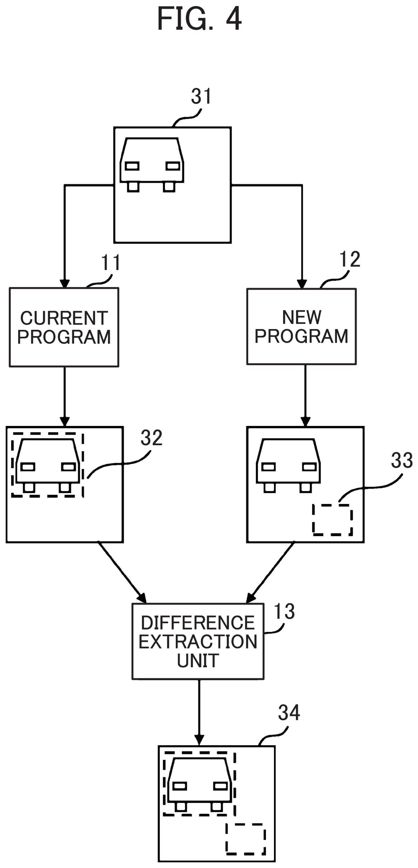

Fig. 4 is a schematic diagram illustrating processing of the difference extraction unit 13. Results of processing the captured image 31 illustrated in an upper portion of Fig. 4 will be described. Another vehicle traveling in front of the vehicle 9 is included in an upper left portion of the captured image 31, and a road is included in other portions of the captured image 31 other than the upper left portion. The current program 11 and the new program 12 process the captured image 31 and outputs the current detection result 32 and the new detection result 33, respectively. In the current detection result 32, as indicated by a broken line, the region of the vehicle is detected. In the new detection result 33, a road surface is detected. Outer edges of the regions detected in the current detection result 32 and the new detection result 33 are hereinafter referred to as "detection frames".

The difference extraction unit 13 extracts, as a difference, a mismatch between coordinates at which the object was detected, a mismatch in the type of the object, and a mismatch in the detection reliability between the current detection result 32 and the new detection result 33. It is possible to determine whether or not the coordinates match by, for example, determining whether an Intersect of Union (IoU) is less than or equal to a predetermined threshold value, for example, 0.5. Specifically, in a case where the region of the detection frame in the current detection result 32 is A32, the region of the detection frame in the new detection result 33 is A33, and a region in which both the regions of the detection frames overlap is B, the difference extraction unit 13 determines that the coordinates match when the following Equation 1 is established.

$$IoU = B/(A32+A33-B) > 0.5 \quad ... \quad (Equation\ 1)$$

In the example illustrated in Fig. 4, the detection frame of the current detection result 32 and the detection frame of the new detection result 33 do not overlap at all, B in Equation 1 is zero, the condition of Equation 1 is not established, and the difference extraction unit 13 determines that the coordinates do not match. Then, the difference extraction unit 13 outputs, as the detected difference 34, the regions of the detection frames that do not overlap as illustrated in a lower portion of Fig. 4.

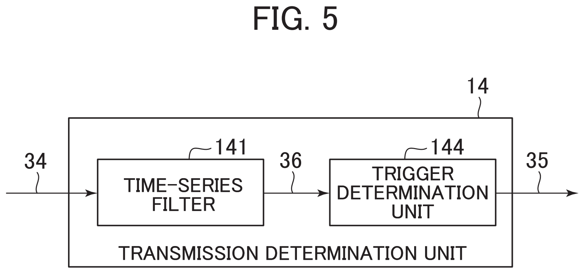

Fig. 5 is a diagram illustrating a first example of a transmission determination unit 14. The transmission determination unit 14 illustrated in Fig. 5 includes a time-series filter 141 and a trigger determination unit 144. The time-series filter 141 inputs the detected difference 34 and outputs a time-series filter output 36. The time-series filter 141 observes a status of occurrence of the detected difference 34 in time series and quantifies a degree of certainty. Specifically, the time-series filter 141 determines that the degree of certainty is high when the difference occurs N times consecutively in time series, and outputs, as the time-series filter output 36, information indicating that the difference has occurred, and the trigger determination unit 144 outputs the transmission trigger 35 for saving the corresponding captured image 31. The time-series filter output 36 is hereinafter also referred to as a "time-series score".

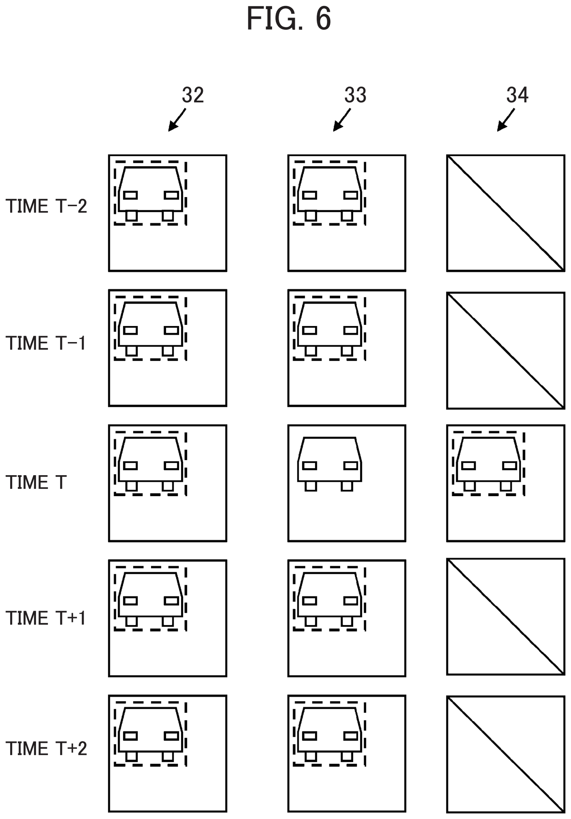

Fig. 6 is a diagram illustrating an example of the detected difference 34 input to a time-series filter 141. Fig. 6 illustrates data at five times from a time T-2 to a time T+2 from the top toward the bottom in the drawing, and illustrates the current detection result 32, the new detection result 33, and the detected difference 34 from the left to the right in the drawing. Diagonal lines in the detected difference 34 indicate that the difference is not detected. In this case, in a case where a threshold value for the degree of certainty is N = 3, the difference is not present at the times T-2 and T-1 before the time T and at the times T+1 and T+2 after the time T when the difference has occurred, and thus it is determined that the degree of certainty of occurrence of the difference is low, and the time-series filter 141 ignores the difference at the time T. In this example, if the threshold value for the degree of certainty is N = 1, the time-series filter 141 outputs, as the time-series filter output 36, information indicating that the difference has occurred.

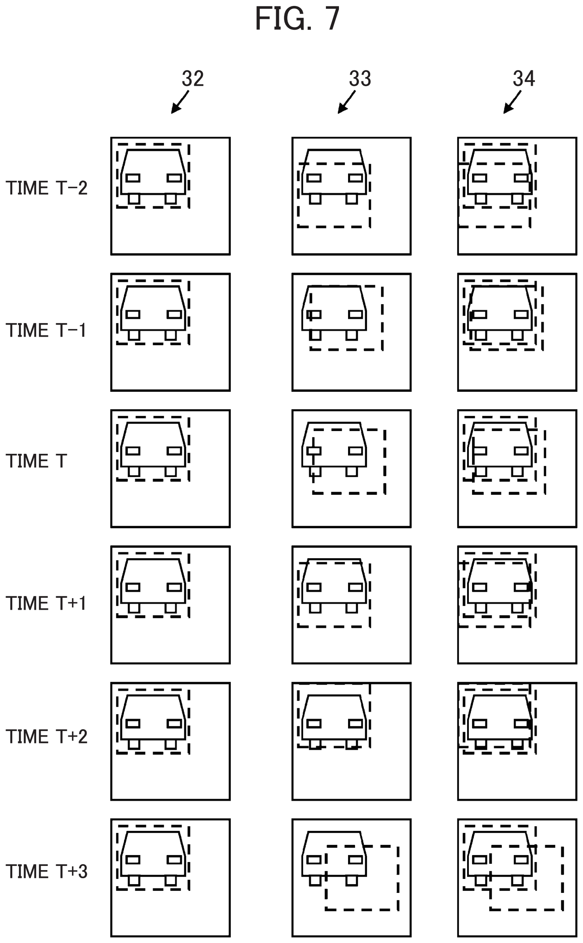

Fig. 7 is a diagram illustrating another example of the detected difference 34 input to the time-series filter 141. Fig. 7 illustrates data at six times from the time T-2 to a time T+3 from the top to the bottom in the drawing and illustrates the current detection result 32, the new detection result 33, and the detected difference 34 from the left to the right in the drawing. In the example illustrated in Fig. 7, the coordinates of the detection frame in the new detection result 33 fluctuate and differ from time to time, and are different from those in the current detection result 32. In the example illustrated in Fig. 7, the difference extraction unit 13 determines that the difference is greater than or equal to the threshold value at all the times, and the detection frames of the current detection result 32 and the new detection result 33 at each of the times are output as the detected difference 34.

The time-series filter 141 averages the fluctuations of the coordinates of the detection frame in time series, calculate an average (hereinafter referred to as "Aiou") of IoUs calculated with the current detection result 32, and makes a determination. For example, the time-series filter 141 may be configured to ignore the difference between the current detection result 32 and the new detection result 33 when the Aiou is less than 0.5. Averaging processing in this process may be a simple average within a predetermined time or a moving average. To summarize these, the time-series filter output 36 can be said to be a value obtained by analyzing the degree of certainty of the detected difference 34 from a time-series perspective. However, in the example illustrated in Fig. 7, the detected difference 34 includes data necessary to calculate an IoU. In this case, when the time-series filter output 36 is expressed by a sign Ct, for example, it can be defined as follows.

$$Ct = D \times Aiou \quad \ldots \quad (Equation\ 2)$$

When the trigger determination unit 144 determines that Ct exceeds a certain determination threshold value, the trigger determination unit 144 outputs the transmission trigger 35 for saving the captured image 31 corresponding to the calculated detected difference 34. These processes are an example, and the trigger determination unit 144 may be configured to output the transmission trigger 35 according to whether the detected difference 34 stably occurs when the detected difference 34 is observed in time series.

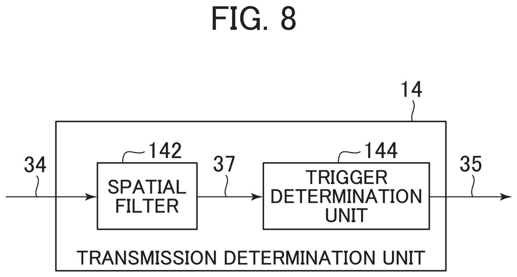

Fig. 8 is a diagram illustrating a second example of the transmission determination unit 14. The transmission determination unit 14 illustrated in Fig. 8 includes a spatial filter 142 and the trigger determination unit 144. The spatial filter 142 inputs the detected difference 34 and outputs a spatial filter output 37. The spatial filter 142 calculates importance of a position at which the detected difference 34 has occurred, and outputs the spatial filter output 37. The spatial filter output 37 is hereinafter also referred to as a "position score".

For example, when it is assumed that an output of the image recognition device 1 is used for a peripheral recognition application for autonomous driving, and the detected difference 34 occurs on a road on which the vehicle 9 travels, this may lead to control such as sudden braking, sudden steering, or the like in a subsequent control program. Therefore, the spatial filter 142 outputs the spatial filter output 37 while treating, as an important difference, the detected difference 34 on the road on which the vehicle 9 travels, and the trigger determination unit 144 outputs the transmission trigger 35. Meanwhile, the detected difference 34 in a sky in the captured image 31 or in a building located far away does not affect control of the vehicle 9, and thus the spatial filter 142 ignores the difference. An important region for the vehicle 9 dynamically changes depending on a movement and a positional relationship of a peripheral object, the shape of the road, the speed and steering information of the vehicle 9, and thus it is preferable that regions be defined using this information in accordance with the influence on the control.

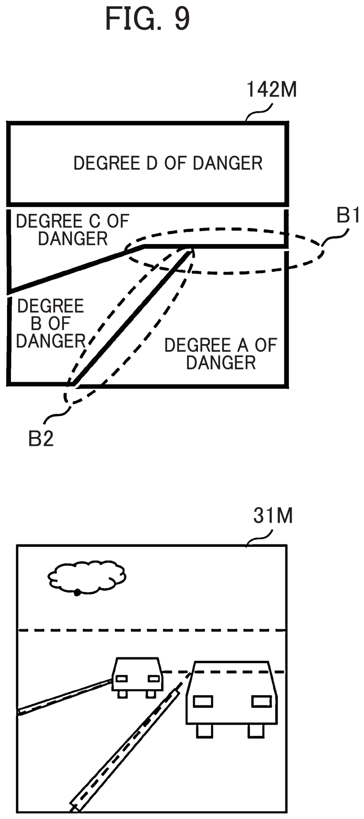

Fig. 9 is a diagram illustrating an example of a degree-of-danger determination map 142M referenced by the spatial filter 142. In the degree-of-danger determination map 142M, degrees A to D of danger are set for each region. The highest degree A of danger corresponds to a region that is included in the captured image 31, is a travel lane where the vehicle 9 is traveling, and is in a range less than a predetermined distance. The second highest degree B of danger corresponds to a region that is included in the captured image 31 and is a lane adjacent to the lane where the vehicle 9 is traveling. The third highest degree C of danger corresponds to a region that is included in the captured image 31, is two or more lanes away from the lane where the vehicle 9 is traveling, or a sidewalk, and is separated by a predetermined distance or longer.

The spatial filter 142 outputs, as the spatial filter output 37, a value according to a degree of danger at a position corresponding to the detected difference 34 in the degree-of-danger determination map 142M, for example. Specifically, in a case where the detected difference 34 is present in a region in which the degree of danger is A, "5" is output. In a case where the detected difference 34 is present in a region in which the degree of danger is B, "3" is output. In a case where the detected difference 34 is present in a region in which the degree of danger is C, "1" is output. In a case where the detected difference 34 is present in a region in which the degree of danger is D, "0" is output. However, in a case where the detected difference 34 is present in a region in which the degree of danger is D, the spatial filter 142 may not output the spatial filter output 37.

In a superimposed image 31M illustrated in a lower portion of Fig. 9, a boundary indicated in the risk determination map 142M is superimposed on the captured image 31. It can be seen that the region in which the degree of danger is A is the region of the lane where the vehicle 9 is traveling, and the region in which the degree of danger is D is the region of the sky. In the degree-of-danger determination map 142M, a boundary B1 that is a boundary B1 between the region in which the degree of danger is A and the region in which the degree of danger is C may be moved upward in the drawing as the traveling speed of the vehicle 9 increases. This is due to the fact that the higher the speed of the vehicle 9 is, the wider a dangerous region becomes. In addition, a boundary B2 that is a boundary between the region in which the degree of danger is A and the region in which the degree of danger is B may be moved or deformed according to a steering operation of the vehicle 9 or the shape of the road.

The spatial filter 142 can use an output of a speed sensor (not illustrated) and information of the rotation speed of wheels to transform the degree-of-danger determination map 142M according to the traveling speed of the vehicle 9. The spatial filter 142 can use the amount of the steering operation of the vehicle 9 and an output of a gyro sensor (not illustrated) to transform the degree-of-danger determination map 142M according to the steering operation of the vehicle 9. The spatial filter 142 can use an output of a sensor (not illustrated) capable of measuring the shape of a road, a combination of map information and self-location information, and the like to transform the degree-of-danger determination map 142M according to the shape of the road.

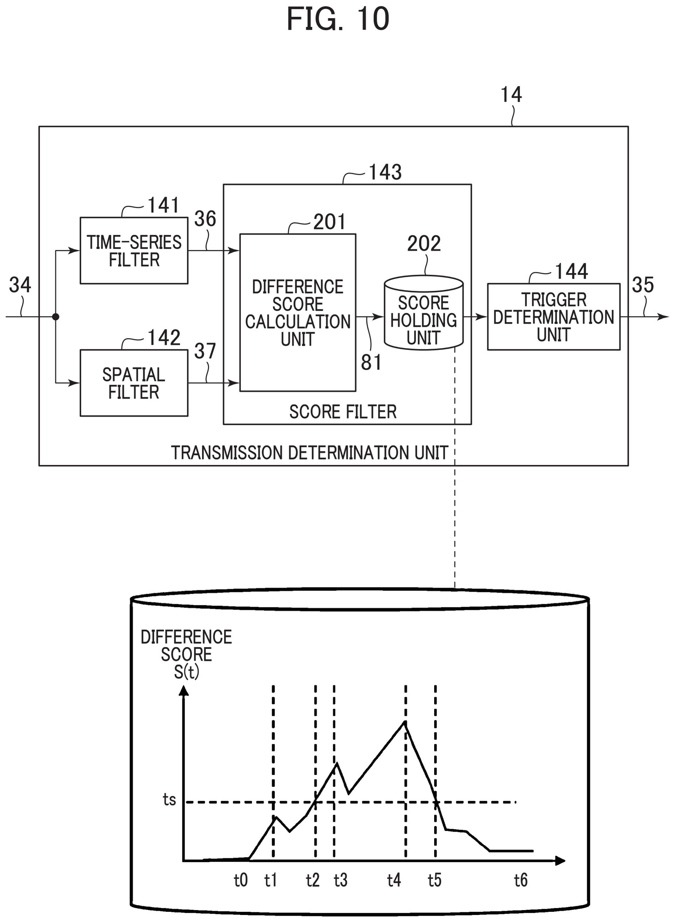

Fig. 10 is a diagram illustrating a third example of the transmission determination unit 14. The transmission determination unit 14 illustrated in Fig. 10 includes the time-series filter 141, the spatial filter 142, a score filter 143, and the trigger determination unit 144. The trigger determination unit 144 determines whether to output the transmission trigger 35 by using outputs of the time-series filter 141 and the spatial filter 142 that have been quantified by the score filter 143.

The score filter 143 includes a difference score calculation unit 201 and a score holding unit 202. In a lower portion of Fig. 10, an example of data stored in the score holding unit 202 is illustrated as a graph. The time-series filter output 36 and the spatial filter output 37 are input to the difference score calculation unit 201. The difference score calculation unit 201 calculates a quantified difference score 81 by using the time-series filter output 36 and the spatial filter output 37, and stores the calculated difference store 81 to the score holding unit 202. A difference score S(t) at a time t is defined as follows when, for example, the time-series filter output 36 is expressed by a degree Ct(t) of certainty of the difference and the spatial filter output 37 is expressed by importance P(t).

$$S(t) = Ct(t) \times P(t) \quad \ldots \quad (Equation\ 3)$$

The trigger determination unit 144 may generate the transmission trigger 35 by using, as a target, a captured image 31 corresponding to the maximum score in a predetermined period of time. In addition, the trigger determination unit 144 may generate the transmission trigger 35 by using, as a target, a captured image 31 corresponding to a difference score 81 which includes a plurality of local maximum values. Further, the trigger determination unit 144 may generate the transmission trigger 35 by using, as a target, a captured image 31 corresponding to a difference score 81 which is greater than a threshold value. This will be described in detail with reference to the graph illustrated in the lower portion of Fig. 10.

In the lower portion of Fig. 10, the difference score 81 is illustrated in time series from a time t0 to a time t6. The difference score 81 repeatedly increases and decreases in a period of time from the time t0 to the time t6. The local maximum values are obtained at the three times, a time t1, a time t3, and a time t4, and the maximum value is obtained at the time t4. In addition, the difference score 81 exceeds a threshold value ts from a time t2 to a time t5. The trigger determination unit 144 may generate the transmission trigger 35 for a captured image 31 at the time t4 when the difference score 81 is maximum. In addition, the trigger determination unit 144 may generate the transmission trigger 35 for captured images 31 at the times t1, t3, and t4 when the difference score 81 is the local maximum values. Further, the trigger determination unit 144 may generate the transmission trigger 35 for captured images 31 at all the times t2 to t5 when the difference score 81 is greater than the threshold value ts.

According to the first embodiment described above, the following effects are obtained.

(1) The image recognition device 1 performs object detection on the captured image 31 by using the image recognition program. The image recognition device 1 includes the ROM 42 that stores the current program 11 which is a previous image recognition program and the new program 12 which is a new image recognition program, the difference extraction unit 13 that extracts the detected difference 34 that is a difference between an object detection result of the current program 11 and an image recognition result of the new program 12 for the same captured image 31, the transmission determination unit 14 that determines whether to save the captured image 31, based on a status of appearance of the detected difference 34, and the trigger receiving unit 19 that outputs, to the outside of the image recognition device 1, the captured image 31 determined by the transmission determination unit 14 to be saved. Therefore, it is possible to appropriately determine the captured image 31 for evaluating the new program 12. Details are described as follows.
The current program 11 and the new program 12 sequentially input captured images 31 from the camera 91, execute image processing, and continue to output the current detection result 32 and the new detection result 33. The difference extraction unit 13 inputs these results and continues to output the detected difference 34. In a case where the image processing program is configured based on machine learning such as a DNN, the detected difference 34 is frequently output. Therefore, simply saving the captured images 31 requires a large storage region, and a captured image 31 that is not appropriate for evaluation of the new program 12 is included. In the present embodiment, this problem is solved by the transmission determination unit 14 determining an appropriate captured image 31. In addition, since the captured image 31 output by the image recognition device 1 is transmitted to the outside of the vehicle 9 via the out-of-vehicle communication device 92, the transmission determination unit 14 determines the appropriate captured image 31 to obtain an effect of reducing the amount of communication from the vehicle 9 to the outside.
(2) The transmission determination unit 14 includes the time-series filter 141 that determines, based on a detected difference in a plurality of captured images 31 acquired at different times, whether to save the plurality of captured images 31. Therefore, the image recognition device 1 can select and store detected differences 34 that have consecutively occurred as illustrated in Fig. 6.
(3) The transmission determination unit 14 includes the spatial filter 142 that determines whether to save the captured image 31, based on importance according to the position of the detected difference in the captured image 31. Therefore, the image recognition device 1 can save the detected difference 34 at an important position in the captured image 31 as illustrated in Fig. 9.

(4) The transmission determination unit 14 includes the time-series filter 141 that calculates, as a time-series score, appearance of a detected difference in a plurality of captured images 31 acquired at different times, the spatial filter 142 that calculates, as a position score, importance according to the position of the detected difference in the captured images 31, the score filter 143 that calculates a difference score 81 by using the time-series score and the position score, and the trigger determination unit 144 that determines whether to save the captured images, based on the difference score 81. Therefore, the image recognition device 1 can select an appropriate captured image 31 from both the temporal and spatial perspectives.

(5) The score filter 143 includes the score holding unit 202 that stores the difference score 81, and the trigger determination unit 144 determines whether to save the captured images 31, based on the difference score stored in the score holding unit 202. Therefore, the image recognition device 1 can select a captured image 31 corresponding to the maximum value or a local maximum value of the difference score 81.

(6) The trigger determination unit 144 determines whether to save a captured image 31 which is at least one of the captured image 31 corresponding to the difference score 81 that is maximum in a predetermined period of time, the captured image 31 corresponding to the difference score 81 exceeding a predetermined threshold value, and the captured image 31 corresponding to the difference score 81 that is a local maximum value.

First Modification

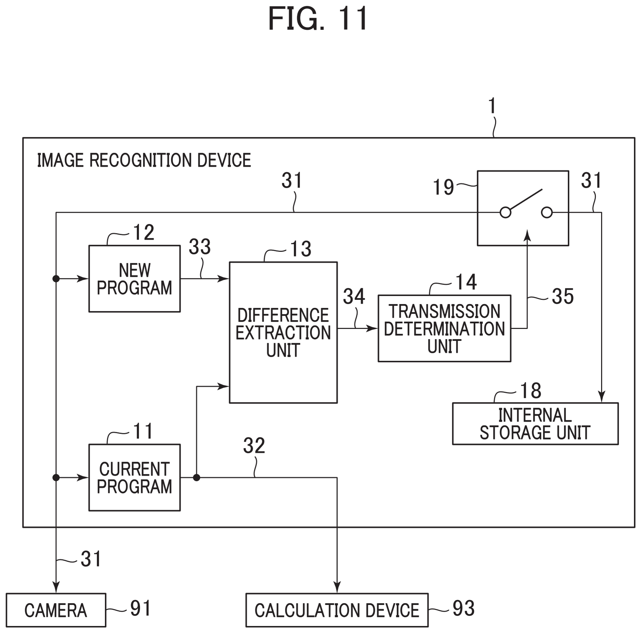

Fig. 11 is a configuration diagram of the image recognition device 1 according to a first modification. The image recognition device 1 includes an internal storage unit 18 that is a nonvolatile storage device. The trigger receiving unit 19 may store, to the internal storage unit 18, a captured image to be stored. In this case, the vehicle 9 may not include the out-of-vehicle communication device 92. In this modification, the transmission determination unit 14 determines a captured image 31 to be saved in the image recognition device 1, and thus the transmission determination unit 14 can be referred to as a "saving determination unit".

Second Embodiment

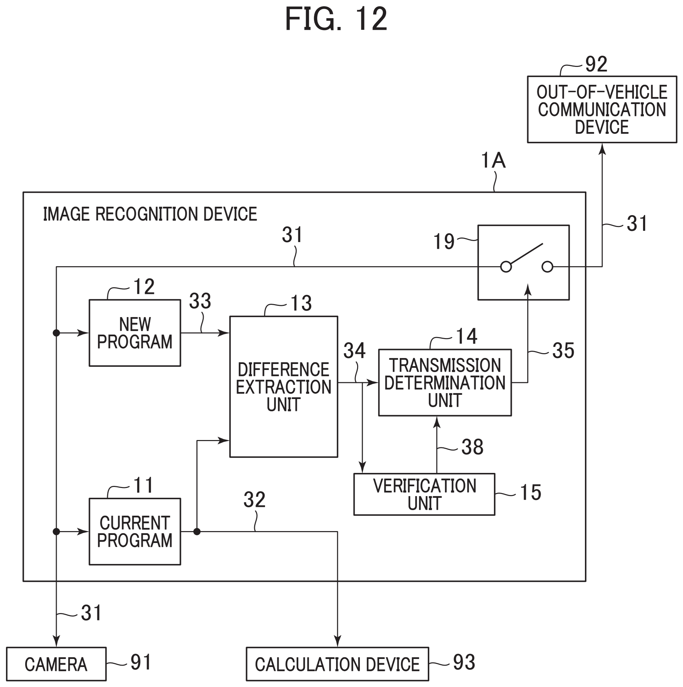

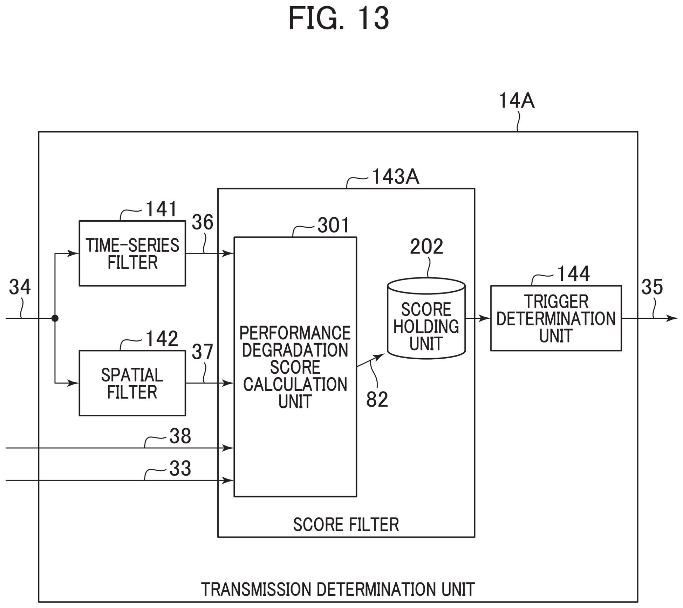

A second embodiment of the image recognition device and the saved image determination method will be described with reference to Figs. 12 and 13. The same constituent elements as those in the first embodiment are denoted by the same reference signs, and differences from the first embodiment are mainly described below. Features not particularly described are the same as those in the first embodiment. The present embodiment differs from the first embodiment mainly in that the new program transmits only a captured image that cannot be processed more appropriately than the current program.

Fig. 12 is a configuration diagram of an image recognition device 1A according to the second embodiment. The image recognition device 1A further includes a verification unit 15 in addition to the configuration of the image recognition device 1 according to the first embodiment. The verification unit 15 inputs the detected difference 34 from the difference extraction unit 13, calculates a reliability score 38, and outputs the reliability score 38 to the transmission determination unit 14. The transmission determination unit 14 outputs a transmission trigger 35 using the reliability score 38 in addition to the processing described in the first embodiment.

The verification unit 15 verifies degradation of detection of the new program 12 with respect to the current program by using a rule base or object detection and calculates the reliability score 38. The reliability score 38 is, for example, a value in a range from 1 to 10. The larger the value, the higher the possibility that the detected difference 34 is caused by degradation of the new program 12 with respect to the current program 11. For example, it is assumed that the new program 12 is modified so as to newly detect an object R with respect to the current program 11 and that the detected difference 34 occurs because only the new program 12 recognizes a certain region.

In this case, when the verification unit 15 performs object detection on the detected difference 34 and the object R is detected, the detected difference 34 is the result of the new program 12 operating as intended, and thus a low reliability score 38 is set. However, when any object is not detected as a result of performing the object detection on the detected difference 34, the new program 12 has caused erroneous detection, and thus a high reliability score 38 is set.

Fig. 13 is a configuration diagram of a transmission determination unit 14A according to the second embodiment. The transmission determination unit 14A includes the time-series filter 141, the spatial filter 142, a score filter 143A and trigger determination unit 144. The detected difference 34 is input to the time-series filter 141 and the spatial filter 142 as in the first embodiment. Processing of the time-series filter 141 and the spatial filter 142 is the same as or similar to that in the first embodiment, and a description thereof is omitted. The score filter 143A includes a performance degradation score calculation unit 301 and the score holding unit 202. The time-series filter output 36, the spatial filter output 37, the reliability score 38, and the new detection result 33 are input to the score filter 143A.

The performance degradation score calculation unit 301 calculates a performance degradation score 82 as indicated in the following Equation 4 and outputs the performance degradation score 82 to the score holding unit 202. When the performance degradation score 82 at a time t is expressed by Sd(t), Sd(t) can be calculated as follows.

$$Sd(t) = Ct(t)P(t)Vc(t)/Dc(t) \quad ... \quad (Equation\ 4)$$

In Equation 4, Ct(t) is the time-series filter output 36 at the time t, P(t) is the spatial filter output 37 at the time t, Vc(t) is the reliability score 38 of the verification at the time t, and Dc(t) is the reliability of a detection result in the new program 12 at the time t. That is, the lower the reliability in the determination of the degradation of the performance is, the lower the performance degradation score Sd(t) is. The lower the reliability Dc(t) of the detection result in the new program 12 is, the higher the performance degradation score Sd(t) is.

The trigger determination unit 144 generates the transmission trigger 35 while treating the time-series performance degradation score 82 stored in the score holding unit 202 in the same manner as the difference score 81 in the first embodiment. That is, the trigger determination unit 144 generates the transmission trigger 35 for captured images 31 corresponding to the performance degradation score 82 that is the maximum value in a predetermined period of time, the performance degradation score 82 that is a local maximum value, the performance degradation score 82 that is greater than a predetermined threshold value, and the like.

According to the second embodiment described above, the following effects are obtained.

(7) The image recognition device 1A includes the verification unit 15 that outputs the reliability score 38 indicating the extent to which the detected difference is caused by degradation of the new program 12 with respect to the current program 11. The transmission determination unit 14 determines whether to save the captured image, based on the status of the appearance of the detected difference 34 and the reliability score 38. Therefore, the image recognition device 1A can select the detected difference 34 caused by the new program 12 being inferior to the current program 11.

(8) The new program 12 outputs new program reliability that is reliability of the detection result. The image recognition device 1A includes the time-series filter 141 that calculates, as the time-series filter output 36 that is also referred to as a time-series score, appearance of a detected difference in a plurality of captured images acquired at different times, the spatial filter 142 that calculates, as the spatial filter output 37 that is also referred to as a position score, importance according to a position of the detected difference in the captured images 31, and the performance degradation score calculation unit 301 that calculates the performance degradation score 82 based on the new program reliability, the time-series filter output 36, the spatial filter output 37, and the reliability score 38. The transmission determination unit 14A determines whether to save the captured images, based on the performance degradation score 82.

(9) The image recognition device 1A includes the score holding unit 202 that stores the performance degradation score 82. The trigger determination unit 144 of the transmission determination unit 14A determines whether to save the captured images, based on the performance degradation score 82 stored in the score holding unit 202.

(Modification of Second Embodiment)

The performance degradation score calculation unit 301 may calculate a difference score S(t) as follows without using the reliability score 38 calculated by the verification unit 15.

$$S(t) = Ct(t)P(t)/Dc(t) \quad ... \quad (Equation\ 5)$$

Subsequent processing and determination for the difference score S(t) are the same as those in the second embodiment, and a description thereof is omitted.

Third Embodiment

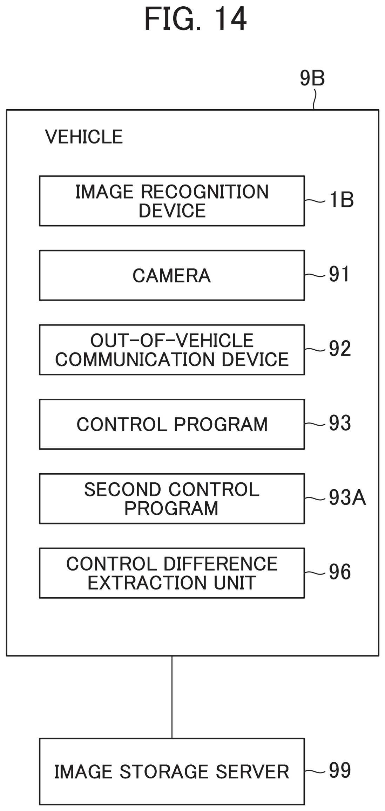

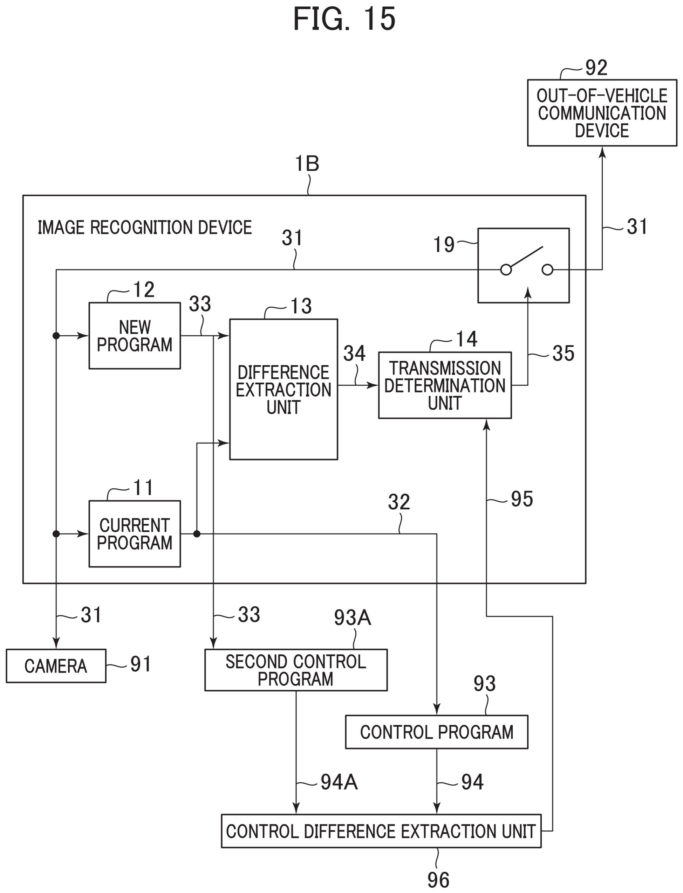

A third embodiment of the image recognition device and the saved image determination method will be described with reference to Figs. 14 and 15. The same constituent elements as those in the first embodiment are denoted by the same reference signs, and differences from the first embodiment are mainly described below. Features not particularly described are the same as those in the first embodiment. The present embodiment differs from the first embodiment mainly in that a difference between the current program and the new program is determined by comparing an output of a subsequent control program.

Fig. 14 is a configuration diagram of a vehicle 9B on which an image recognition device 1B according to the third embodiment is mounted. The vehicle 9B includes the image recognition device 1B, the camera 91, the out-of-vehicle communication device 92, the control program 93, a second control program 93A and a control difference extraction unit 96. The second control program 93A is the same as the control program 93. However, the second control program 93A is different from the control program 93 in that an output of the control program 93 is used for control of a vehicle 9B, whereas an output of the second control program 93A is not used for control of the vehicle 9B. The control difference extraction unit 96 extracts a difference between the output of the control program 93 and the output of the second control program 93A.

The control program 93 and the second control program 93A may be different instances generated from the same binary, or the same instance may be treated as pseudo-different instances in a time-sharing manner. However, the binary of the control program 93 and the binary of the second control program 93A may not completely match, and it only needs to be confirmed that a difference between the outputs is caused by a difference between inputs.

Fig. 15 is a diagram illustrating a relationship between the image recognition device 1B, the control program 93, the second program 93A, and the control difference extraction unit 96. The current program 11 is the same as that in the first embodiment in that the current program 11 outputs the current detection result 32 to the difference extraction unit 13 and the control program 93. The new program 12 outputs the new detection result 33 to not only the difference extraction unit 13 but also the second control program 93A. The control program 93 inputs the current detection result 32 and outputs a first calculation result 94. The second control program 93A inputs the new detection result 33 and outputs a second calculation result 94A. The control difference extraction unit 96 extracts a difference between the first calculation result 94 and the second calculation result 94A and outputs the control difference 95 to the transmission determination unit 14.

The detected difference 34 and the control difference 95 are input to the transmission determination unit 14. The transmission determination unit 14 may output the transmission trigger 35 based on these AND conditions. In addition, the transmission determination unit 14 may calculate the difference score 81 using not only the time-series filter output 36 and spatial filter output 37 but also the control difference 95, and generate the transmission trigger 35 for a captured image 31 corresponding to a value greater than the maximum value and a local maximum value of the difference score 81 and greater than the threshold value for the difference score 81.

According to the third embodiment described above, the following effects are obtained.

(10) The current detection result 32 that is the object detection result of the current program 11 is used for the control program 93 that outputs the first calculation result 94. The first calculation result 94 is used for control of the vehicle 9 on which the image recognition device 1 is mounted. The transmission determination unit 14 determines whether to save the captured image, based on the control difference 95 which is the difference between the second calculation result 94A obtained by inputting the new detection result 33 which is an object detection result of the new program 12 to the second control program 93A and the first calculation result 94, and the status of the appearance of the detected difference 34. Therefore, it is possible to select a captured image 31 that affects the entire system by comparing a difference between the current program 11 and the new program 12 from the perspective of an output of the control program 93 that uses an output of the current program 11.

The first to third embodiments described above and the modifications of the embodiments may be implemented individually or in combination. In addition, depending on system requirements and the verification phase, the sensitivity at which the difference data is collected or the upper limit of the frame rate of images that can be transmitted due to communication cost constraints changes. Therefore, it is also possible to perform operation by switching the configuration described in each of the embodiments depending on the conditions. For example, the configuration in the third embodiment may be taken immediately after the program is updated and verification using a real machine is started, truly important difference information that affects control may be extracted, and thereafter, difference data for a condition to be paid attention may be collected while various parameters are adjusted in the configurations described in the first embodiment and the second embodiment.

In addition, the captured image 31 that is obtained in each of the embodiments and has a high collectible value may not only be transmitted or saved, but may be used to improve the degree of certainty of the current detection result 32 used for vehicle control. For example, when the current detection result 32 includes a detection error, the new detection result 33 is correct (the updated version has improved performance), and the transmission determination unit determines that the degree of certainty is high, a result of the verification may be input to the control program 93 at the subsequent stage to implement an operation system with higher performance.

In each of the embodiments and the modifications described above, the configurations of the functional blocks are an example. Some of the functional configurations indicated as separate functional blocks may be integrated, and a configuration illustrated in a single functional block diagram may be divided into two or more functions. In addition, a part of the function included in each of the functional blocks may be included in another one of the functional blocks.

In each of the embodiments and the modifications described above, the program that implements the difference extraction unit 13 and the transmission determination unit 14 is stored in the ROM 42, but the program may be stored in a nonvolatile storage device. In addition, the image recognition device 1 may include an input and output interface (not illustrated), and the program may be read from another device via the input and output interface and a medium that can be used by the image recognition device 1. In this case, the medium refers to, for example, a storage medium that is insertable in and removable from the input and output interface, or a communication medium, that is, a wired, wireless, or optical network, or a carrier wave or digital signal that propagates through the network. In addition, some or all of the functions implemented by the program may be implemented by a hardware circuit or an FPGA.

Each of the embodiments and the modifications described above may be combined. Although the various embodiments and modifications are described above, the present invention is not limited to the contents of these embodiments and modifications. Other aspects that can be considered within the technical idea of the present invention are included in the scope of the present invention.

List of Reference Signs

1, 1A, 1B: image recognition device, 9, 9B: vehicle, 11: current program, 12: new program, 13: difference extraction unit, 14, 14A: transmission determination unit, 15: verification unit, 18: internal storage unit, 31: captured image, 32:current detection result, 33: new detection result, 34: detected difference, 35: transmission trigger, 36: time-series filter output, 37: spatial filter output, 38: reliability score, 81: differential score, 82: performance degradation score, 91: camera, 93: control program, 93A: second control program, 94: first calculation result, 94A: second calculation result, 95: control difference, 96: control difference extraction unit, 141: time-series filter, 142: spatial filter, 142M: degree-of-danger determination map, 143: score filter, 143A: score filter, 144: trigger determination unit, 201: difference score calculation unit, 202: score holding unit, 301: performance degradation calculation unit.

## Claims

1. An image recognition device that performs object detection on an input image by using an image recognition program, the image recognition device comprising:

   a storage unit that stores a current program which is a previous image recognition program and a new program which is a new image recognition program;
   a difference extraction unit that extracts a detected difference which is a difference between an object detection result of the current program and an image recognition result of the new program for the same input image;
   a transmission determination unit that determines whether to save the input image, based on a status of appearance of the detected difference; and
   a saving unit that outputs, to an outside of the image recognition device, the input image determined by the transmission determination unit to be saved, or that saves, in the image recognition device, the input image determined by the transmission determination unit to be saved.

2. The image recognition device according to claim 1, wherein
   the transmission determination unit includes a time-series filter that determines, based on the detected difference in a plurality of input images acquired at different times, whether to save the plurality of input images.

3. The image recognition device according to claim 1, wherein
   the transmission determination unit includes a spatial filter that determines whether to save the input image, based on importance according to a position of the detected difference in the input image.

4. The image recognition device according to claim 1, wherein

   the transmission determination unit includes
   a time-series filter that calculates, as a time-series score, appearance of the detected difference in a plurality of input images acquired at different times,
   a spatial filter that calculates, as a position score, importance according to a position of the detected difference in the input images,
   a score filter that calculates a difference score by using the time-series score and the position score, and
   a trigger determination unit that determines whether to save the input image, based on the difference score.

5. The image recognition device according to claim 4, wherein

   the score filter includes a score holding unit that stores the difference score, and
   the trigger determination unit determines whether to save the input images, based on the difference score stored in the score holding unit.

6. The image recognition device according to claim 5, wherein

the trigger determination unit determines whether to save at least one of the input image corresponding to the difference score that is maximum in a predetermined period of time, the input image corresponding to the difference score exceeding a predetermined threshold value, and the input image corresponding to the difference score that is a local maximum value.

7. The image recognition device according to claim 1, further comprising:

a verification unit that outputs a reliability score indicating an extent to which the detected difference is caused by degradation of the new program with respect to the current program, wherein
the transmission determination unit determines whether to save the input image, based on the status of the appearance of the detected difference and the reliability score.

8. The image recognition device according to claim 7, wherein

the new program outputs new program reliability that is reliability of the detection result,
the image recognition device further comprises:

a time-series filter that calculates, as a time-series score, appearance of the detected difference in a plurality of input images acquired at different times;
a spatial filter that calculates, as a position score, importance according to a position of the detected difference in the input images;
a performance degradation score calculation unit that calculates a performance degradation score based on the new program reliability, the time-series score, the position score, and the reliability score, and
the transmission determination unit determines whether to save the input images, based on the performance degradation score.

9. The image recognition device according to claim 8, further comprising:

a score holding unit that stores the performance degradation score, wherein
the trigger determination unit determines whether to save the captured images, based on the performance degradation score stored in the score holding unit.

10. The image recognition device according to claim 1, wherein

the objection detection result of the current program is used for a first program that outputs a first calculation result,
the first calculation result is used for control of a vehicle on which the image recognition device is mounted, and
the transmission determination unit determines whether to save the input image, based on a control difference that is difference between a second calculation result obtained by inputting an object detection result of the new program to the first program and the first calculation result, and the status of the appearance of the detected difference.

11. The image recognition device according to claim 7, wherein

the object detection result of the current program is used for a first program that outputs a first calculation result,
the first calculation result is used for control of a vehicle on which the image recognition device is mounted, and
the transmission determination unit determines whether to save the input image, based on a control difference that is difference between a second calculation result obtained by inputting an object detection result of the new program to the first program and the first calculation result, and the status of the appearance of the detected difference.

12. A saved image determination method that is executed by an image recognition device that performs object detection on an input image by using an image recognition program and includes a storage unit that stores a current program which is a previous image recognition program and a new program which is a new image recognition program, the method comprising:

a difference extraction step of extracting a detected difference that is a difference between an object detection result of the current program and an image recognition result of the new program for the same input image;
a transmission determination step of determining whether to save the input image, based on a status of appearance of the detected difference; and

a saving step of outputting, to an outside of the image recognition device, the input image determined by the transmission determination unit to be saved, or saving, in the image recognition device, the input image determined by the transmission determination unit to be saved.

# FIG. 1

9

VEHICLE

| IMAGE RECOGNITION DEVICE | 1 |

| CAMERA | 91 |

| OUT-OF-VEHICLE COMMUNICATION DEVICE | 92 |

| CONTROL DEVICE | 93 |

IMAGE STORAGE SERVER — 99

# FIG. 2

# FIG. 3

1

IMAGE RECOGNITION DEVICE

| GPU | 40 |

| CPU | 41 |

| ROM | 42 |

| RAM | 43 |

| IN-VEHICLE COMMUNICATION DEVICE | 44 |

# FIG. 4

# FIG. 5

# FIG. 6

# FIG. 7

# FIG. 8

# FIG. 9

142M

DEGREE D OF DANGER

DEGREE C OF
DANGER

B1

DEGREE
B OF
DANGER

DEGREE A OF
DANGER

B2

31M

# FIG. 10

# FIG. 11

# FIG. 12

# FIG. 13

# FIG. 14

9B

VEHICLE

| IMAGE RECOGNITION DEVICE | ～1B |

| CAMERA | ～91 |

| OUT-OF-VEHICLE COMMUNICATION DEVICE | ～92 |

| CONTROL PROGRAM | ～93 |

| SECOND CONTROL PROGRAM | ～93A |

| CONTROL DIFFERENCE EXTRACTION UNIT | ～96 |

IMAGE STORAGE SERVER ～99

# FIG. 15

## INTERNATIONAL SEARCH REPORT

| International application No. |
|---|
| **PCT/JP2023/041494** |

| **A. CLASSIFICATION OF SUBJECT MATTER** |
|---|
| ***G06V 10/98***(2022.01)i; ***G06T 7/00***(2017.01)i; ***G06T 7/70***(2017.01)i; ***G08G 1/00***(2006.01)i; ***G08G 1/16***(2006.01)i<br>FI:   G06V10/98; G06T7/00 650B; G06T7/70 A; G08G1/16 A; G08G1/00 A |
| According to International Patent Classification (IPC) or to both national classification and IPC |

| **B. FIELDS SEARCHED** |
|---|
| Minimum documentation searched (classification system followed by classification symbols)<br>    G06V10/98; G06T7/00; G06T7/70; G08G1/00; G08G1/16 |
| Documentation searched other than minimum documentation to the extent that such documents are included in the fields searched<br>    Published examined utility model applications of Japan 1922-1996<br>    Published unexamined utility model applications of Japan 1971-2023<br>    Registered utility model specifications of Japan 1996-2023<br>    Published registered utility model applications of Japan 1994-2023 |
| Electronic data base consulted during the international search (name of data base and, where practicable, search terms used) |

| **C. DOCUMENTS CONSIDERED TO BE RELEVANT** | | |
|---|---|---|
| Category* | Citation of document, with indication, where appropriate, of the relevant passages | Relevant to claim No. |
| A | WO 2020/049685 A1 (HONDA MOTOR CO., LTD.) 12 March 2020 (2020-03-12)<br>paragraphs [0048], [0055]-[0063], [0079], [0086], [0103]-[0105], [0138]-[0164] | 1-12 |
| A | WO 2021/181793 A1 (OMRON CORPORATION) 16 September 2021 (2021-09-16)<br>paragraphs [0041], [0046]-[0047], [0061]-[0065] | 1-12 |

| ☐ Further documents are listed in the continuation of Box C. | ☑ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **20 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/041494**

| Patent document cited in search report | | | Publication date (day/month/year) | Patent family member(s) | | | Publication date (day/month/year) |
|---|---|---|---|---|---|---|---|
| WO | 2020/049685 | A1 | 12 March 2020 | US | 2021/0323565 | A1 | |
| | | | | paragraphs [0058], [0065]-[0073], [0089], [0096], [0113]-[0115], [0148]-[0174] | | | |
| | | | | CN | 112639913 | A | |
| WO | 2021/181793 | A1 | 16 September 2021 | JP | 2021-144000 | A | |
| | | | | paragraphs [0041], [0046]-[0047], [0061]-[0065] | | | |
| | | | | CN | 115210559 | A | |

Form PCT/ISA/210 (patent family annex) (January 2015)

**REFERENCES CITED IN THE DESCRIPTION**

**Patent documents cited in the description**

- WO 2018150504 A